# EUROPEAN PATENT SPECIFICATION

(11) **EP 0 447 806 B1**
(45) Date of publication and mention of the grant of the patent: **24.04.1996**
(21) Application number: 91102187.1
(22) Date of filing: 15.02.1991
(51) Int. Cl.: C08L 53/02

(54) **Blends based on vinyl-aromatic polymers endowed with good mechanical characteristics**
Mischungen auf Basis von vinylaromatischen Polymeren mit guten mechanischen Eigenschaften
Compositions à buse de polymères vinylaromatiques ayant de bonnes propriétés mécaniques

(30) Priority: 16.02.1990 IT 1938290
(43) Date of publication of application: 25.09.1991
(73) Proprietor: ENICHEM S.p.A., I-20124 Milano (IT)
(72) Inventor: Fasulo, Gian Claudio, Dr., I-46010 San Silvestro, Mantova (IT); Ghidoni, Dario, Dr., I-46020 Gonzaga, Mantova (IT); Callaioli, Andrea, Dr., I-46100 Mantova (IT); Matarrese, Savino, Dr., I-37138 Verona (IT)
(74) Representative: Barz, Peter, Dr.

(56) References cited:
- EP-A- 0 010 558
- EP-A- 0 060 524
- EP-A- 0 402 340
- EP-A- 0 437 745
- DE-A- 1 941 018
- CHEMICAL ABSTRACTS, vol. 110, no. 18, 1 May 1989, Columbus, Ohio, US; abstract no. 155546W, page 48 & JP-A-63 230 754

## Description

The present invention relates to blends based on vinyl-aromatic polymers endowed with highly satisfactory mechanical characteristics, even after successive processing operations carried out at temperatures equal to or higher than 200°C, such as for example of from 200 to 250°C.

More particularly, the present invention relates to blends based on vinyl-aromatic polymers having highly satisfactory mechanical and rheological properties, suitable for use in the production of shaped articles endowed with good physical properties and with which it is also possible to recover and reuse the processing scrap material.

As is known, vinyl-aromatic polymers are thermoplastic resins suitable for being transformed, under heating, into shaped articles by injection or extrusion molding. Said vinyl-aromatic polymers have a fair tenacity, but they are not suitable for use in applications where a high tenacity associated with good chemical resistance is required.

One way of improving these lacking properties is to provide a blend with other polymers having the missing properties so as to obtain a material exhibiting the desired combination of properties. However, this approach was successful only in a limited number of cases. Generally, in fact, the blending results in a combination of the worst characteristics of each component, the overall result being a material of such poor properties that it is of no practical or commercial value any more.

The reason for this failure is that not all polymers are compatible with each other and, therefore, do not perfectly adhere to each other. As a result, interfaces are formed between the components of the blend, which interfaces represent weakness and breaking points.

More particularly, the blending of polystyrene, or generally of a vinyl-aromatic polymer or copolymer, either as such or rendered impact-resistant by grafting with a rubber and a polyolefin, results in blends showing a heterogeneous structure and mechanical weakness, due to the incompatibility of these two types of polymers.

US-A-4,386,187 discloses a thermoplastic composition comprising from 54 to 82% by weight of a polyolefin, form 15 to 40% by weight of a vinyl-aromatic polymer and from 2 to 10% by weight of a styrene-butadiene-styrene thermoplastic block copolymer.

These compositions are homogeneous and can be used for the production of shaped articles; however, their poor mechanical characteristics in terms of modulus and IZOD resilience do not make them suitable for use in applications where these properties are required.

From EP-A-291,352 it is known that homogeneous polymeric compositions containing a polyolefin and a vinyl-aromatic polymer may be prepared by using a vinyl-aromatic polymer containing, as elastomeric component, small quantitites of a vinyl-aromatic monomer-conjugated diene linear block copolymer and, as compatibilizing agent for the polyolefin and the vinyl-aromatic polymer, a vinyl-aromatic monomer-conjugated diene star-shaped block copolymer.

Particularly, said document discloses a polymer blend comprising:
- from 40 to 98% by weight of a vinyl-aromatic polymer containing dispersed therein, as elastomeric component, from 0.5 to 5% by weight of a vinyl-aromatic monomer-conjugated diene linear block copolymer;
- from 1 to 54% by weight of a polyolefin; and
- from 1 to 20% by weight of a vinyl-aromatic monomer-conjugated diene star-shaped block copolymer.

The above blends are homogeneous and suitable for being transformed into shaped articles by extrusion, injection molding and/or thermoforming. They show, however, some drawbacks which limit the use thereof in such processes. The main drawback is that the processing scrap material cannot be reused owing to a drastic decay of the mechanical properties of the resulting blend, particularly the resilience and the elongation at break. This undesired effect generally involves a waste of the processing scrap material, the amount of which may be as high as 50 to 60% of the virgin product.

The present invention provides a composition based on vinyl-aromatic polymers which does not exhibit the above drawbacks.

The thermoplastic polymeric composition of the present invention comprises:
- from 10 to 90% by weight of vinyl-aromatic polymer (A) prepared by polymerizing a vinyl-aromatic monomer in the presence of from 0.5 to 5% by weight of vinyl-aromatic monomer-conjugated diene linear block copolymer and from 5 to 15% by weight of a diene rubber;
- from 5 to 50% by weight of polyolefin (B); and
- from 5 to 40% by weight of vinyl-aromatic monomer-conjugated diene linear block copolymer (C) having a diene content of from 20 to 80% by weight;
the sum of the three components (A), (B) and (C) being equal to 100%.

Preferably, the polymeric composition of the present invention comprises:
- from 60 to 80% by weight of vinyl-aromatic polymer (A);
- from 10 to 30% by weight of polyolefin (B); and
- from 5 to 20% by weight of vinyl-aromatic monomer-conjugated diene linear block copolymer (C);
the sum of components (A), (B) and (C) being equal to 100%.

The vinyl-aromatic polymer (A) may be prepared by carrying out the polymerization of a vinyl-aromatic monomer having the general formula (I): 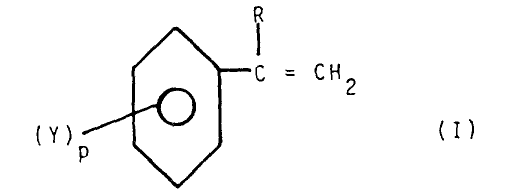 wherein R represents hydrogen or an alkyl radical having from 1 to 4 carbon atoms (e.g. methyl and ethyl); p is zero or an integer of from 1 to 5 (preferably 1 to 3), and Y represents a halogen atom (e.g. F, Cl, Br and I) or an alkyl radical having from 1 to 4 carbon atoms (e.g. methyl or ethyl), in the presence of a diene rubber and a vinyl-aromatic monomer-conjugated diene linear block copolymer, in the amounts given above, optionally by using conventional radical generating polymerization catalysts.

Examples of vinyl-aromatic compounds having the above general formula (I) are styrene; methyl-styrene; mono-, di-, tri-, tetra- and penta-chlorostyrene and the corresponding alpha-methyl-styrenes; styrenes alkylated in the nucleus and the corresponding alpha-methyl-styrenes such as ortho- and para-methyl-styrenes, ortho- and para-ethyl-styrenes; ortho- and para-methyl-alpha-methyl-styrenes, etc. These monomers may be used either alone or in combination with each other or with other copolymerizable co-monomers such as, for instance, maleic anhydride, acrylonitrile, methacrylonitrile and C₁-C₄ alkyl esters of acrylic acid or methacrylic acid.

The content of diene rubber which may e.g. be selected from polybutadiene (e.g. high or medium cis- and low viscosity polybutadiene), poly-isoprene, copolymers of butadiene and/or isoprene with styrene or with other monomers, preferably ranges from 7 to 12% by weight.

The content of vinyl-aromatic monomer-conjugated diene linear block polymer preferably ranges from 2 to 5% by weight. Such copolymers are per se well known in the art and available on the market.

Preferably these linear block copolymers contain from 20 to 75% by weight of recurring units derived from vinyl-aromatic monomer and from 80 to 25% by weight of recurring units derived from conjugated diene.

These block copolymers can be constituted by exclusively "pure" blocks or can optionally contain random or tapered polymeric segments (B/S) or can be constituted by random and/ or tapered copolymers.

The above linear block copolymers are described, for instance, by Allen Noshay & James E. McGrath in "Block Copolymers", 1977, pages 83-92 and 186-192. Further information regarding the properties, structure and characteristics of these linear block copolymers is provided by Holden et al in "Thermoplastic Elastomers" published by N.R. Legge et al., 1987.

Linear block copolymers of this type are available on the market, for example, as "SOLPRENE^{®} 1205", "SOLPRENE^{®} 308" and "SOLPRENE^{®} 314" (produced and sold by Phillips Petroleum).

The preparation of the vinyl-aromatic polymer (A) may be carried out according to any known method, e.g., suspension, bulk-suspension or continuous bulk polymerization processes.

A preferred method of preparation comprises the pre-polymerization of the vinyl-aromatic monomer in the presence of a conventional free radical catalyst, a diene rubber and the above block copolymer in a first reactor up to a conversion lower than 50% by weight of the introduced monomers.

Then, the polymerization is continued in one or more subsequent reactors until the polymerization of the monomers is substantially complete. The thus-obtained polymer may then be devolatilized and granulated.

The polyolefin (B) is preferably polyethylene, e.g., linear low density polyethylene (LLDPE), medium density or high density polyethylene. Other polyolefins such as polypropylene, polybutene, polymethylpentene, as well as copolymers of two or more alpha-olefins (e.g. ethylene-propylene copolymers) and copolymers of an alpha-olefin with an ethylenically unsaturated monomer different from an alpha-olefin (e.g. ethylene-vinyl acetate (EVA) copolymers) may also be used.

The vinyl-aromatic monomer-conjugated diene linear block copolymer (C) used as compatibilizing agent in the composition of the present invention, is also of a known type and available on the market. Preferably said block copolymer is of one or more of the following types:

(II) S-B;

(III) S₁-B-S₂;

(IV) B₁-S₁-B₂-S₂;

wherein S, S₁, S₂ represent non-elastomeric polymer blocks of a vinyl-aromatic monomer of (preferably) the above formula (I), which have the same or different molecular weights; and B, B₁ and B₂ are elastomeric polymer blocks based on a conjugated diene which have the same or different molecular weights.

These linear block copolymers (C) are known from the literature and disclosed, e.g., in US-A-3,265,765. Further information regarding the physical and structural characteristics of these polymers is provided by B.C. Allport et al. in "Block Copolymers", Applied Science Publishers Ltd. 1973.

The (mono)vinyl-aromatic monomer particularly suitable for the preparation of the block copolymers (C) is styrene; alkyl-substituted styrenes showing the same copolymerization properties such as, for instance, methyl-styrenes, ethyl-styrenes, t.-butyl-styrenes, etc., may, however, also be used.

Conjugated dienes useful for preparing the block copolymers (C) are those having from 4 to 8 carbon atoms such as, for instance, 1,3-butadiene, isoprene, 2,3-dimethyl-1,3-butadiene, piperylene, and mixtures thereof.

In the linear block copolymers (C), the non-elastomeric polymer block is preferably polystyrene having an average molecular weight of from about 5,000 to about 250,000. The elastomeric polymer block is preferably polybutadiene having an average molecular weight of from about 2,000 to about 250,000.

Between the S, S₁, S₂ and B, B₁ and B₂ polymeric blocks there can be present random and/or tapered segments wherein the transition between the B, B₁ and B₂ blocks and the S, S₁ and S₂ blocks can be gradual in the sense that the proportion of the vinyl-aromatic monomer in the dienic polymer increases progressively in the direction of the non-elastomeric polymer block, while the proportion of the conjugated diene decreases progressively; or which can be constituted by a zone wherein e.g. styrene and e.g. butadiene monomers alternate statistically. The molecular weight of the random and or tapered segments preferably ranges from about 500 to about 50,000.

The linear block copolymers (C) are available on the market, for example, under the tradename "CARIFLEX ® TR 1102 S" (produced and sold by SHELL) or "FINAPRENE ® 315" (produced and sold by FINA).

A linear block copolymer (C) particularly preferred in the compositions of the present invention is that of formula B₁-S₁-B₂-S₂ (IV) with a weight average molecular weight of from about 30,000 to about 250,000 and a total content of butadiene monomer units from 40 to 80% by weight; in this polymer the weight average molecular weight of block B₁ preferably varies form 0.1 to 0.5 times of that of block B₂, and the weight average molecular weight of block S₁ preferably varies from 0.25 to 2.0 times of that of block S₂. This preferred copolymer contains, furthermore, a copolymeric segment formed by statistically linked diene and vinyl-aromatic monomer units between the blocks B₁ and S₁.

This linear block copolymer is known form IT-A-21,563 A/87 and is produced and sold by ENICHEM ELASTOMERI under the tradename "EUROPRENE ® SOL T 168".

The blend of the present invention may be prepared by first blending the components at a low temperature, in any known type of mixer. Then, the blend may be extruded in a single-screw or double-screw extruder at a temperature preferably ranging from 150 to 250°C.

The compositions may contain a small amount, generally from 0.1 to 3% by weight, of a stabilizer or of other additives, intimately mixed therewith.

Plasticizers, lubricants, anti-flame agents, flowing agents, anti-static agents, dyestuffs, pigments and foaming agents for the production of low density articles and semi-finished products, etc. may be added during the blending of the components, preferably in quantities of from 0.1 to 10% by weight.

The blends of the present invention may easily be processed and exhibit a combination of properties which, on the whole, is significantly better than that of each of the individual components. For this reason, the blends of the present invention may be used for the manufacturing of articles endowed with highly satisfactory mechanical and rheological properties combined with good chemical resistance.

Therefore, the blends of the present invention are useful in the fields of electric appliances, electronics, and generally in the field of technical materials, in the form of films, sheets, tapes, bands, rods, boxes, cups, containers, etc.

The blends may also be used to produce foamed articles by techniques per se known in the art.

A further advantage of the blends of the present invention is that all their mechanical properties remain substantially unchanged even after repeated processing operations at temperatures equal to or higher than 200°C. Due to these properties, the processing scrap material can be recovered and may be recycled in the process and used again as virgin material.

The following non-limiting examples are given to illustrate the present invention.

In said examples all parts and percentages are expressed by weight, unless otherwise indicated.

### EXAMPLE 1 (Comparison)

In a rotating drum at room temperature there was prepared a blend of:
- 75 parts of an impact-resistant styrene polymer (A) containing, dispersed in the polymeric matrix, 7.75% of a polybutadiene rubber and 3% of a linear block copolymer (SOLPRENE ® 1205 produced and sold by Phillips Petroleum) containing 25% of styrene and 75% of butadiene and having an average molecular weight of 75,000;
- 15 parts of a linear low density polyethylene (LLDPE) (B) having a density of 0.926 g/cm³ and a melt flow index (M.F.I.) of 0.7 g/10 min.; and
- 10 parts of a radial (star-shaped) block copolymer (D) comprising 70% of butadiene and 30% of styrene, containing silicon as coupling radical, each polymeric unit having an average molecular weight of 40,000.

The thus-obtained blend was extruded in a single-screw BANDERA ® TR 45 extruder having a diameter of 45 mm.

The temperature profile of the extruder between the hopper and the extrusion head was 150°C, 180°C, 190°C, 215°C.

The granules of the first extrusion were then re-extruded in the same single-screw BANDERA ® TR 45 extruder at a temperature of 240°C and with a residence time in the extruder of 55 seconds.

The resilience, elongation and rheological properties of the obtained samples were determined after two, four and six extrusion operations carried out in the same extruder and under the same processing conditions.

For the rheological properties, the M.F.I. was determined according to ASTM D 1238, at 220°C and 10 kg; and the notched IZOD resilience was determined at 23°C, according to ASTM D 256, on test pieces having a thickness of 12.7 mm, obtained by injection molding at a temperature of 190°C on a NEGRI & BOSSI V 17 - 110 FA injection molding press. The elongation at break was determined according to ASTM D 638.

The measured properties are listed in the following Table.

### EXAMPLE 2

By operating under the same processing conditions as in example 1, the following blend was prepared:
- 75 parts of the impact-resistant styrene polymer (A) of example 1;
- 15 parts of the linear low density polyethylene (LLDPE) (B) of example 1; and
- 10 parts of a linear block copolymer (C) having the structure (IV), comprising 57% of butadiene and 43% of styrene, sold by ENICHEM ELASTOMERI under the tradename "EUROPRENE ® SOL T 168".

The rheological, IZOD resilience and elongation properties are listed in the following Table.

**TABLE 1**

| NUMBER OF EXTRUSIONS | (COMPARATIVE) EXAMPLE 1 | | | EXAMPLE 2 | | |
|---|---|---|---|---|---|---|
| | IZOD (J/m) | M.F.I. (g/10') | ELONGATION (%) | IZOD (J/m) | M.F.I. (g/10') | ELONGATION (%) |
| 1 | 280 | 30 | 74 | 320 | 36 | 75 |
| 2 | 220 | 18 | 65 | 320 | 35 | 70 |
| 4 | 140 | 25 | 55 | 280 | 25 | 69 |
| 6 | 105 | 30 | 45 | 240 | 20 | 69 |

## Claims

1. A blend based on vinyl-aromatic polymers, comprising
- from 10 to 90% by weight of vinyl-aromatic polymer (A) prepared by polymerizing a vinyl-aromatic monomer in the presence of from 0.5 to 5% by weight of vinyl-aromatic monomer-conjugated diene linear block copolymer and from 5 to 15% by weight of a diene rubber;
- from 5 to 50% by weight of polyolefin (B); and
- from 5 to 40% by weight of vinyl-aromatic monomer-conjugated diene linear block copolymer (C) having a diene content of from 20 to 80% by weight;
the sum of the three components (A), (B) and (C) being equal to 100%.

2. Blend according to claim 1, comprising:
- from 60 to 80% by weight of vinyl-aromatic polymer (A);
- from 10 to 30% by weight of polyolefin (B); and
- from 5 to 20% by weight of vinyl-aromatic monomer-conjugated diene linear block copolymer (C).

3. Blend according to any one of claims 1 and 2, wherein in vinyl-aromatic polymer (A) the amount of diene rubber ranges from 7 to 12% by weight and/or the amount of vinyl-aromatic monomer-conjugated diene linear block copolymer ranges from 2 to 5% by weight.

4. Blend according to any one of the preceding claims, wherein the vinyl-aromatic monomer-conjugated diene linear block copolymer contains from 20 to 75% by weight of units derived from the vinyl-aromatic monomer and from 80 to 25% by weight of units derived from the conjugated diene.

5. Blend according to any one of the preceding claims, wherein the linear block copolymer is constituted by pure polymeric blocks of vinyl-aromatic monomer and conjugated diene monomer; or contains random and/or tapered segments of vinyl-aromatic monomer and conjugated diene; or is constituted by random and/or tapered copolymers of vinyl-aromatic monomer and conjugated diene.

6. Blend according to any one of the preceding claims, wherein the polyolefin is linear low density, high density, or medium density polyethylene.

7. Blend according to any one of the preceding claims, wherein the vinyl-aromatic monomer-conjugated diene linear block copolymer (C) is of the type:
(II) S-B;
(III) S₁-B₁-S₂,
or
(IV) B₁-S₁-B₂-S₂
wherein S, S₁ and S₂ are non-elastomeric polymer blocks of vinyl-aromatic monomer which have the same or different molecular weights and B, B₁ and B₂ are elastomeric polymer blocks based on conjugated diene, which have the same or different molecular weights.

8. Blend according to claim 7, wherein random and/or tapered segments are present between the individual S, S₁, S₂, B, B₁ and B₂ polymer blocks.

9. Blend according to any one of claims 7 and 8, wherein the non-elastomeric polymer block is polystyrene having an average molecular weight of from about 5,000 to about 250,000 and the elastomeric polymer block is polybutadiene having an average molecular weight of from about 2,000 to about 250,000 and the random and/or tapered segments have an average molecular weight of from about 500 to about 50,000.

10. Blend based on vinyl-aromatic polymers according to any one of claims 7 to 9, wherein the linear block copolymer (C) has the general formula (IV)
B₁ - S₁ - B₂ - S₂ (IV)
a weight average molecular weight of from about 30,000 to about 250,000 and a total content of butadiene-derived units of from 40 to 80% by weight, the weight average molecular weight of block B₁ ranging from 0.1 to 0.5 times of that of block B₂ and the weight average molecular weight of block S₁ ranging from 0.25 to 2.0 times that of block S₂, said polymer (C) further containing, between blocks B₁ and S₁, a copolymeric segment formed by statistically linked diene- and vinyl-aromatic monomer-derived units.

## Patentansprüche

1. Mischung auf der Basis von vinylaromatischen Polymeren, umfassend
- 10 bis 90 Gewichts-% vinylaromatisches Polymer (A), hergestellt durch Polymerisation eines vinylaromatischen Monomers in Anwesenheit von 0,5 bis 5 Gewichts-% linearem vinylaromatisches Monomer-konjugiertes Dien-Block-Copolymer und 5 bis 15 Gewichts-% Dien-Kautschuk;
- 5 bis 50 Gewichts-% Polyolefin (B); und
- 5 bis 40 Gewichts-% lineares vinylaromatisches Monomer-konjugiertes Dien-Block-Copolymer (C) mit einem Dien-Gehalt von 20 bis 80 Gewichts-%;
wobei die Summe der drei Komponenten (A), (B) und (C) gleich 100% ist.

2. Mischung nach Anspruch 1, umfassend:
- 60 bis 80 Gewichts-% vinylaromatisches Polymer (A);
- 10 bis 30 Gewichts-% Polyolefin (B); und
- 5 bis 20 Gewichts-% lineares vinylaromatisches Monomer-konjugiertes Dien-Block-Copolymer (C).

3. Mischung nach irgendeinem der Ansprüche 1 und 2, in welcher im vinylaromatischem Polymer (A) die Menge an Dien-Kautschuk im Bereich von 7 bis 12 Gewichts-% liegt und/oder die Menge an linearem vinylaromatisches Monomer-konjugiertes Dien-Block-Copolymer im Bereich von 2 bis 5 Gewichts-% liegt.

4. Mischung nach irgendeinem der vorangehenden Ansprüche, in welcher das lineare vinylaromatisches Monomer-konjugiertes Dien-Block-Copolymer 20 bis 75 Gewichts-% von dem vinylaromatischen Monomer abgeleitete Einheiten und 80 bis 25 Gewichts-% von dem konjugierten Dien abgeleitete Einheiten enthält.

5. Mischung nach irgendeinem der vorangehenden Ansprüche, in welcher das lineare Block-Copolymer von reinen Polymer-Blöcken von vinylaromatischem Monomer und konjugiertem Dien-Monomer aufgebaut ist; oder statistische und/oder konisch zulaufende Segmente von vinylaromatischem Monomer und konjugiertem Dien enthält; oder aus statistischen und/oder konisch zulaufenden Copolymeren von vinylaromatischem Monomer und konjugiertem Dien aufgebaut ist.

6. Mischung nach irgendeinem der vorangehenden Ansprüche, in welcher das Polyolefin lineares Polyethylen niedriger Dichte, Polyethylen hoher Dichte oder Polyethylen mittlerer Dichte ist.

7. Mischung nach irgendeinem der vorangehenden Ansprüche, in welcher das lineare vinylaromatische Monomer-konjugiertes Dien-Block-Copolymer (C) vom folgenden Typ ist:
(II) S-B;
(III) S₁-B₁-S₂,
oder
(IV) B₁-S₁-B₂-S₂
worin S, S₁ und S₂ nicht-elastomere Polymer-Blöcke von vinylaromatischem Monomer darstellen, die dieselben oder unterschiedliche Molekulargewichte aufweisen, und B, B₁ und B₂ elastomere Polymer-Blöcke auf der Basis von konjugiertem Dien sind, die dasselbe oder unterschiedliche Molekulargewichte aufweisen.

8. Mischung nach Anspruch 7, in welcher zwischen den einzelnen Polymer-Blöcken S, S₁, S₂, B, B₁ und B₂ statistische und/oder konisch zulaufende Segmente vorhanden sind.

9. Mischung nach irgendeinem der Ansprüche 7 und 8, in welcher der nicht-elastomere Polymer-Block aus Polystyrol mit einem durchschnittlichen Molekulargewicht von etwa 5000 bis etwa 250000 besteht und der elastomere Polymer-Block aus Polybutadien mit einem durchschnittlichen Molekulargewicht von etwa 2000 bis etwa 250000 besteht und die statistischen und/oder konisch zulaufenden Segmente ein durchschnittliches Molekulargewicht von etwa 500 bis etwa 50000 aufweisen.

10. Mischung auf der Basis von vinylaromatischen Polymeren gemäß irgendeinem der Ansprüche 7 bis 9, in welcher das lineare Block-Copolymer (C) die allgemeine Formel (IV)
B₁-S₁-B₂-S₂ (IV)
ein Gewichtsmittel des Molekulargewichts von etwa 30000 bis etwa 250000 und einen Gesamtgehalt an von Butadien abgeleiteten Einheiten von 40 bis 80 Gewichts-% aufweist, wobei das Gewichtsmittel des Molekulargewichts von Block B₁ im Bereich vom 0,1- bis 0,5-fachen desjenigen von Block B₂ liegt und das Gewichtsmittel des Molekulargewichts von Block S₁ im Bereich vom 0,25- bis 2,0-fachen desjenigen von Block S₂ liegt, wobei Polymer (C) zwischen den Blöcken B₁ und S₁ weiter ein copolymeres Segment enthält, das aus statistisch verknüpften, von Dien und vinylaromatischem Monomer abgeleiteten Einheiten gebildet ist.

## Revendications

1. Mélange à base de polymères vinyl-aromatiques, comportant de :
- 10 à 90% en poids de polymère vinyl-aromatique (A), préparé par polymérisation d'un monomère vinyl-aromatique en présence de 0,5 à 5% en poids de copolymère séquencé linéaire (monomère vinyl-aromatique)/(diène conjugué),
- de 5 à 15% en poids d'un caoutchouc de diène,
- de 5 à 50% en poids de polyoléfine (B), et
- de 5 à 40% en poids de copolymère séquencé linéaire (C) (monomère vinyl-aromatique)/(diène conjugué), présentant une teneur en diène de 20 à 80% en poids ; la somme des trois composants (A), (B) et (C) étant égale à 100%.

2. Mélange conforme à la revendication 1, comprenant :
- de 60 à 80% en poids de polymère vinyl-aromatique (A) ;
- de 10 à 30% en poids de polyoléfine (B) ; et
- de 5 à 20% en poids de copolymère séquencé linéaire (C) (monomère vinyl-aromatique)/(diène conjugué).

3. Mélange conforme à l'une quelconque des revendications 1 et 2, dans lequel dans le polymère vinyl-aromatique (A), la quantité de caoutchouc de diène se situe dans l'intervalle allant de 7 à 12% en poids, et/ou la quantité de copolymère séquencé linéaire (monomère vinyl-aromatique)/(diène conjugué) se situe dans l'intervalle allant de 2 à 5% en poids.

4. Mélange conforme à l'une quelconque des précédentes revendications, dans lequel le copolymère séquencé linéaire (monomère vinyl-aromatique)/(diène conjugué) contient de 20 à 75% en poids de motifs dérivés du monomère vinyl-aromatique et de 80 à 25% en poids de motifs dérivés du diène conjugué.

5. Mélange conforme à l'une quelconque des précédentes revendications, dans lequel le copolymère séquencé linéaire est constitué de séquences pures de monomère vinyl-aromatique et de monomère diène conjugué ; ou contient des segments statistiques et/ou à gradient de motifs de monomère vinyl-aromatique et de diène conjugué, ou est constitué par des copolymères statistiques et/ou à gradient de motifs de monomère vinyl-aromatique et de diène conjugué.

6. Mélange conforme à l'une quelconque des précédentes revendications, dans lequel la polyoléfine est un polyéthylène basse densité linéaire, haute densité, ou moyenne densité.

7. Mélange conforme à l'une quelconque des précédentes revendications, dans lequel le copolymère séquencé linéaire (C) (monomère vinyl-aromatique)/(diène conjugué) est du type :
(II) S-B,
(III) S₁-B₁-S₂,
ou
(IV) B₁-S₁-B₂-S₂
formules dans lesquelles S, S₁ et S₂ sont des séquences de polymères non élastomères du monomère vinyl-aromatique, qui ont des masses moléculaires identiques ou différentes, et B, B₁ et B₂ sont des séquences de polymères élastomères basés sur un diène conjugué, qui ont des masses moléculaires identiques ou différentes.

8. Mélange conforme à la revendication 7, dans lequel des segments statistiques et/ou à gradient de motifs sont présents entre les séquences individuelles de polymères S, S₁, S₂, B, B₁, B₂.

9. Mélange conforme à l'une quelconque des revendications 7 et 8, dans lequel la séquence de polymère non-élastomère est le polystyrène présentant une masse moléculaire moyenne d'environ 5000 à environ 250 000, et la séquence de polymère élastomère est le polybutadiène ayant une masse moléculaire moyenne d'environ 2000 à environ 250 000, et les segments statistiques et/ou à gradient de motifs ont une masse moléculaire moyenne d'environ 500 à environ 50 000.

10. Mélange basé sur les polymères vinyl-aromatiques conforme à l'une des revendications 7 à 9, dans lequel le copolymère séquencé linéaire (C) a la formule générale (IV) :
B₁-S₁-B₂-S₂ (IV),
une masse moléculaire moyenne en poids d'environ 30 000 à environ 250 000, et une teneur totale de motifs dérivés du butadiène comprise entre 40 et 80% en poids, la masse moléculaire moyenne en poids de la séquence B₁ valant de 0,1 à 0,5 fois celle de la séquence B₂, et la masse moléculaire moyenne en poids de la séquence S₁ valant de 0,25 à 2,0 fois celle de la séquence S₂, ledit polymère (C) comportant en outre, entre les séquences B₁ et S₁, un segment copolymère formé par des motifs dérivés du monomère vinyl-aromatique et dérivés du diène, statistiquement liés.
